# EUROPÄISCHE PATENTSCHRIFT

(11) **EP 0 738 027 B1**
(45) Veröffentlichungstag und Bekanntmachung des Hinweises auf die Patenterteilung: **03.03.2004**
(21) Anmeldenummer: 96103520.1
(22) Anmeldetag: 07.03.1996
(51) Int. Cl.: H01R 4/64, H01R 9/05

(54) **Leitungsverbinder**
Line connector
Connexion de ligne

(30) Priorität: 12.04.1995 US 421362
(43) Veröffentlichungstag der Anmeldung: 16.10.1996
(73) Patentinhaber: Airbus Deutschland GmbH, 21129 Hamburg (DE)
(72) Erfinder: Rook, Peter, D-21698 Harsefeld (DE)
(74) Vertreter: Hansmann, Dierk, Dipl.-Ing.

(56) Entgegenhaltungen:
- EP-A- 0 567 802
- US-A- 2 798 113
- US-A- 3 749 814
- US-A- 4 405 969
- US-A- 5 381 834

## Beschreibung

Die Erfindung bezieht sich auf einen Leitungsverbinder zum Anschluß von Schutzschlauchverbindungen eines elektrischen Abschirmungs- oder eines Blitzschutzsystems im Flugzeug. Sie ist weitestgehend zur wirksamen Verbindung mit der metallenen Struktur und anderen geerdeten Teilen der elektrotechnischen Anlage zur Gewährleistung eines Potentialausgleiches durch Erdung in Land-, Wasser- oder Luftfahrzeugen zum Schutz gegen elektromagnetische Störungen nutzbar.

Es ist bekannt, daß äußere Blitzschutzeinrichtungen allein nicht ausreichen, bei Blitzeinschlag in ein Gebäude oder Fahrzeug diverse Schäden an internen elektrischen Geräten zu verhindern. Infolge der Auswirkungen des Blitzstromes können auftretende Überströme entsprechende Schäden an elektrotechnischen oder elektronischen Einrichtungen des betroffenen Objektes, wie beispielsweise in einem Flugzeug, verursachen. Die wesentlichste Maßnahme zur Vermeidung von Gewitterüberspannungsschäden ist dabei der Blitzschutz-Potentialausgleich. Darunter ist in einem Flugzeug das Verbinden der internen Blitzschutzanlage mit der metallenen Struktur oder anderen geerdeten Teilen von elektrotechnischen Anlagen zu verstehen. Da bei einem Blitzstromeinschlag im Flugzeug ein Blitzstromimpuls der Stromstärke von etwa 200 KA erwartet wird, der über stromleitende Verbindungen - mit geringstem elektrischen Übergangswiderstandsanteil - an ein Erdungspotential abzuleiten ist, sind Schwachstellen infolge ungünstiger Kontaktübergänge absolut auszuschließen. Dabei ist von besonderer Bedeutung, daß bei Anordnungen mit Schutzschläuchen zur elektrischen Abschirmung oder für den Blitzschutz die elektrischer Verbindungen nicht durch Leitungsverbinder unterbrochen werden dürfen.

Es sind verschiedene Lösungen bekannt, die mit einem Leitungsverbinder eine Erdleitungsverbindung zu Blitzschutzsystemen realisieren. Dabei wird ein metallener Schutzschlauch mit konventionellen Mitteln am Leitungsverbinder angeschlossen. Bekannt sind Leitungsverbinder mit einem Laschenabgang, welcher über eine Erdleitungsverbindung an ein internes Erdleitungspotential gelegt ist.

Ein Beispiel dafür stellt die EP 0 567 802 dar, nach deren Lösung ein Kunststoffschlauch und ein ihn umhüllender flexibler metallener Schutzschlauch einem Leitungsverbinder unterführt wird. Durch die Crimpung einer metallenen Hülse, die man dem Leitungsverbinder fest anformt, wird der metallene Schutzschlauch auf dem Kunststoffschlauch fixiert und geht dabei mit der Hülse eine leitfähige Verbindung ein. Der Lösung haftet der Nachteil an, daß eine sachgemäße Befestigung der Schläuche ausgeschlossen wird, weil durch die Crimpung infolge des Anpreßdruckes mechanische Schwierigkeiten zu erwarten sind, die durch die Befestigung des metallenen Schutzschlauches ohne zusätzliche Abstützung des Kunststoffschlauches auftreten können. Infolge der zu erwartenden Nachgiebigkeit des Kunststoffschlauches kann man auch auf eine instabile Leitungsverbindung zwischen dem metallenen Schutzschlauch und der metallenen Hülse schließen, weshalb sich durch die vermutete Nachgiebigkeit der Crimpverbindung eine nicht gewollte Erhöhung des Übergangswiderstandsanteiles zwischen den Kontaktauflagen einstellen wird. Außerdem können deshalb die beiden Schutzschläuche gegenüber der metallenen Hülse verrutschen, wodurch die für den Blitzschutz der elektrischen Verbindungen geforderte wirksame Auflagefläche des metallenen Schutzschlauches gemindert wird. Die Befestigung der gecrimmten Schutzschlauchverbindungen entspricht danach nicht dem geforderten Qualitätsmaßstab, weshalb diese qualitativ geminderte Verbindung im Flugzeugbau kaum eingesetzt werden kann. Es wird dahingehend auch kein Vorschlag unterbreitet, wonach mit geeigneten Maßnahmen eine verbesserte Kontaktauflage des metallenen Schlauches gegenüber dem Leitungsverbinder zur weiteren Senkung des Übergangswiderstandsanteiles und ohne Verrutschungsgefahr der Schutzschläuche durch deren Befestigung erfolgen wird.

Demgemäß liegt der Erfindung die Aufgabe zugrunde, einen gattungsgemäßen Leitungsverbinder derart auszubilden, daß mit geeigneten Maßnahmen eine stabile dauerhafte Befestigung der an ihm angeschlossenen Schutzschlauchverbindungen erfolgt. Deren Verrutschungsgefahr ist während und nach Abschluß der Befestigung am Leitungsverbinder gänzlich auszuschließen. Nach der Befestigung am Leitungsverbinder soll der metallene Schutzschlauch eines elektrischen Abschirmungs- oder eines Blitzschutzsystems eine verbesserte Kontaktauflage ohne wirksamen Querschnittsverlust besitzen und zur weiteren Senkung des Übergangswiderstandes an der Übergangsstelle beitragen. Der Leitungsverbinder und der sachgemäß befestigte metallene Schutzschlauch bilden gemeinsam und ständig einen wirksam geerdeten Faradayschen Käfig.

Diese Aufgabe wird bei dem gattungsgemäßen Leitungsverbinder durch die kennzeichnenden Merkmale des Anspruches 1 gelöst. Vorteilhafte Ausgestaltungen der Erfindung sind in den Ansprüchen 2 bis 4 angegeben.

Die durch die Erfindung erreichten Vorteile sind im wesentlichen darin zu sehen, daß eine zuverlässige Befestigung der am Leitungsverbinder angeschlossenen Schutzschlauchverbindungen ohne deren Verrutschungsgefahr während und nach Abschluß der Befestigung mit gering gehaltenem Übergangswiderstand des metallenen Schutzschlauches und verbesserter Kontaktauflage gegenüber dem Leitungsverbinder erfolgt. Der Anschluß der Schutzschlauchverbindungen erfolgt derart, daß eine als Crimphülse ausgebildete Erdungshülse die aufgebrachten Crimpkräfte mit definierter Anpreßkraft sicher auf ein besonders gestaltetes Anschlußelement überträgt, ohne dabei die Schutzschläuche durch Fließen oder (Ab-)Bruch des metallenen Materiales oder Rißbildung oder sonstige mechanische Beschädigungen infolge der übertragenen Druckwirkung durch Crimpung zu beschädigen. Es wird einen stabile und dauerhafte Befestigung der Schutzschlauchverbindungen erzielt, wobei durch deren sachgemäßen Auflage auf dem Anschlußelement und durch deren ausgeschlossene Beschädigung und Verrutschungsgefahr während und nach deren Crimpung sie mit dem Leitungsverbinder einen wirksam geerdeten Faradayschen Käfig bilden.

Die Erfindung ist anhand der Zeichnungen dargestellt und in einem Ausführungsbeispiel näher beschrieben. Es zeigen
- Fig.1: den erfindungsgemäßen Leitungsverbinder mit an ihm befestigten metallenen Schutzschlauch mittels Erdungshülse und Masseanschluß mittels zweier der Erdungshülse abgehobenen Erdungslaschen ;
- Fig.2: den Längsschnitt II-II des Leitungsverbinders mit an ihm befestigten Schutzschläuchen auf einem als verlängerten Teil des Leitungsverbinders dargestelltem Anschlußelement nach der Fig.1;
- Fig. 3: eine Ansicht des Querschnittes III-III des Leitungsverbinders nach der Fig. 1.

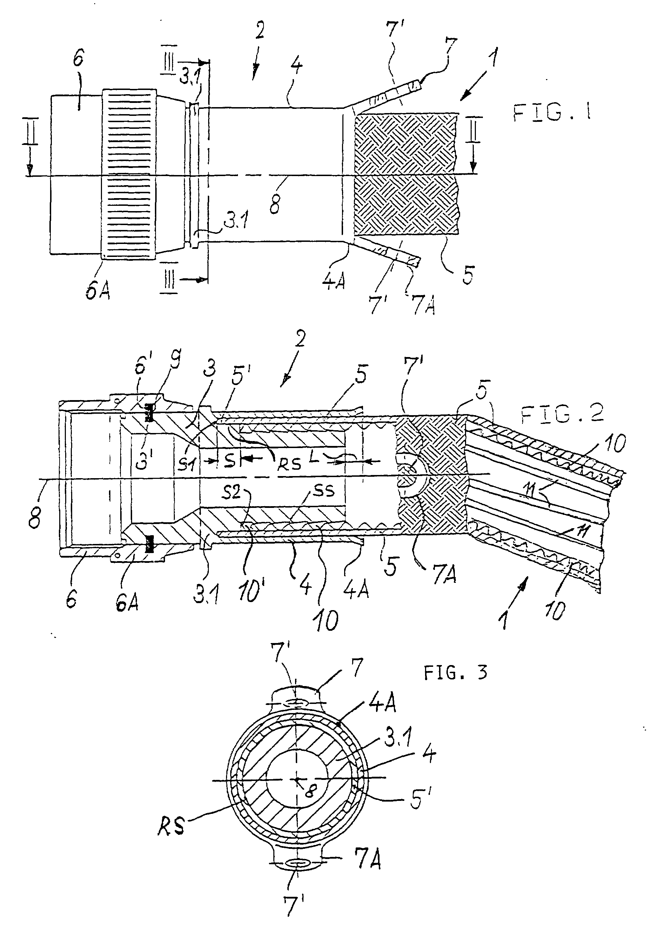

Anhand eines Ausführungsbeispieles soll der erfinderische Leitungsverbinder 2 erläutert werden. Nach den Figuren besteht der Leitungsverbinder 2 grundsätzlich aus einem zylinderförmigen hohlen Grundkörper 3, dem am linken freien Ende koaxial und oberhalb der Mantelfläche des Grundkörpers 3 eine mittels Sprengring 9 drehbeweglich gelagerte Überwurfmutter 6 unverlierbar aufsitzt. Das linke freie Ende des Leitungsverbinders 2 stellt ein steckerverbindungsseitiges Kupplungsende dar. Dabei wird ein in den Figuren 1 und 2 nicht gezeigter elektrischer Steckverbinder (Buchsen- oder Stiftstecker) zusätzlich mit dem Grundkörper 3 verschraubt, an dessen Kontaktelementen die (in der Figur 2 dargestellten) isolierten elektrischen Leitungen 11 angeschlossen sind. Danach läßt sich der Stecker des Steckverbinder 2 an einen weiteren Stecker eines weiteren Steckverbinders 2 oder eines(r) elektrisch betriebenen Gerätes (Gerätegruppe) kuppeln, wobei das dem Leitungsverbinder 2 (vor der Ankuppelung) anliegende Erdpotential auf die Folgeelemente (nach der Ankupplung) übertragen wird. Der erfinderische Leitungsverbinder 2 besteht zudem aus einer zylinderförmigen Erdungshülse 4, die als Crimphülse ausgebildet ist. Die Erdungshülse 4 befindet sich koaxial und oberhalb der Schutzschlauchverbindungen 1.

Mit ihr erfolgt durch Crimpung mit einem geeigneten Crimpwerkzeug die Befestigung der Schutzschlauchverbindungen 1 auf einem Anschlußelement 3.1 , das koaxial und in Richtung einer Längsachse 8 des Leitungsverbinders 2 den verlängerten Teil des Grundkörpers 3 bildet. Es handelt sich bei dem Anschlußelement 3.1 um einen zylinderförmigen hohlen Aufnahmekörper zum Anschluß der Schutzschlauchverbindungen 1, dessen linkes Ende dem Grundkörper 3 fest angesetzt ist. Das linke freie Ende der Erdungshülse 4 ist an den Grundkörper 3 fest angeformt. Die Erdungshülse 4 kann aber (nicht beispieltypisch) auch lose auf den Schlauchverbindungen 1 liegen. Dem Mantel der Erdungshülse 4 sind beispielgemäß zwei entgegengesetzt angeordnete Erdungslaschen 7 ausgeschnitten, die an einen Erdungsleiter angeschlossen sind, welcher mit der Blitzschutz-Potentialausgleichsschiene bzw. mit der metallenen Struktur des Flugzeuges verbunden ist. Das Anschlußelement 3.1, dem die Schutzschlauchverbindungen 1 unmittelbar aufliegen, ist nach diesem Beispiel unterhalb der Erdungshülse 4 angeordnet und stützt die ihm aufliegenden Schutzschlauchverbindungen 1 stabil gegen den beim Crimpen aufgebrachten Anpreßdruck ab.
Die Schutzschlauchverbindungen 1 bilden ein Schutzschlauchsystem, das sich wenigstens aus einem flexiblen Kunststoffschlauch 10 und einem letzteren umhüllenden metallenen Schutzschlauch 5, der als Metallgeflecht ausgeführt ist, aufbaut. Innerhalb des Kunststoffschlauches 10 befinden sich mehrere (gebündelte) isolierte elektrische Leitungen 11, die - wie erwähnt - an den Kontaktelementen des mit dem Leitungsverbinder 2 verschraubten Steckverbinders angeschlossen sind.
Die Überwurfmutter 6, der Grundkörper 3, das Anschlußelement 3.1, die Erdungshülse 4 und der Sprengring 9 sind metallen ausgeführt.

Gemäß der Fig.1 werden die Schutzschlauchverbindungen 1 (metallener Schutzschlauch 5 nur sichtbar) an den Leitungsverbinder 2 nach der vorbeschriebenen Art angeschlossen. Dabei werden die Schutzschlauchverbindungen 1 (in der nach Fig.2 nachfolgend geschilderten Form) der Erdungshülse 4 unterführt und dabei dem Anschlußelement 3.1 versetzt aufgelegt. Die Erdungshülse 4 wird (nach Schnitt II-II) auf den metallenen Schutzschlauch 5 und auf den versetzt (dem freien Ende des Anschlußelementes 3.1 näher) liegenden Kunststoffschlauch 10 des Schutzschlauchsystems gecrimmt, so daß zwischen der Crimphülse 4 und dem metallenen Schutzschlauch 5 bzw. zwischen letzterem und dem Anschlußelement 3.1 eine elektrisch leitende Verbindung besteht, die sich in Fortsetzung auf den Grundkörper 2 bzw. die Erdungslaschen 7 der Crimphülse 4 überträgt. Infolge der Crimpung der Erdungshülse 4 bildet sich an deren rechten freien Ende eine Hülsenschulter 4A (Crimpschulter) aus.
Diese Hülsenschulter 4A ist nach Abschluß des Crimpvorganges voll ausgebildet, an der die dann die Erdungslaschen 7 als integraler Bestandteil der Erdungshülse 7 aufweist. Die Erdungslaschen 7 besitzen je eine mittig sitzende Bohrung 7', um eine (nicht dargestellte) Schraubverbindung, mit der der betreffende (nicht gezeigte) Erdungsleiter befestigt wird.
Am erwähnten linken freien (Kupplungs-) Ende des Grundkörpers 3 wird die ihm drehbar und aufliegende Überwurfmutter 6 figurlich dargestellt. Diese besitzt eine Rändelung 6A, welche zur Unterstützung bei der Drehbewegung als Erleichterung dient.

Aus der Fig.2 kann die Anordnung der Überwurfmutter 6 auf dem Grundkörper 3 genauer entnommen werden. Dabei verfügt der Grundkörper 3 über eine radial nach außen gerichtete Ringnut 3' und die Überwurfmutter 6 über eine radial nach innen gerichtete Ringnut 6'. Ein metallener Sprengring 9 , der als Federring ausgebildet ist, befindet sich in diesen beiden Ringnuten 3', 6'. Er fixiert die Überwurfmutter 6 gegenüber dem Grundkörper 3 (relativ) drehbeweglich zueinander und hält die Überwurfmutter 6 am Grundkörper 3 unverlierbar gegen eine relative Axialverschiebung fest. Der Sprengring 9 stellt einen guten elektrischen Kontakt zwischen dem Grundkörper 3 und der Überwurfmutter 6 sicher.

Nach der Fig.2 läßt sich die kennzeichnende konstruktive Anordnung und Gestaltung des am Grundkörper 3 axial angeformten (hohl-)zylindrischen Anschlußelementes 3.1 erkennen. Diese Gestaltung erlaubt die besondere Anordnung des metallenen Schutzschlauches 5 und des Kunststoffschlauches 10 auf dem Grundkörper 3, wodurch deren stabile und dauerhafte Befestigung mittels der Erdungshülse 4 mit einer genau definierten Kontaktauflage des als Metallgeflecht ausgeführten metallenen Schutzschlauches 5 ohne Querschnittsverlust (infolge verringerter Auflagefläche gegenüber der definierten Auflagefläche) und Querschnittsreduzierung realisiert wird. Die konstruktive Gestaltung einer ringförmigen glatten Auflagefläche eines Mantelteilbereiches des Anschlußelementes 3.1 ermöglicht nach der Crimpung der Erdungshülse 4 einen niedrigen Übergangswiderstand zwischen dem metallenen Schutzschlauch 5 und der Erdungshülse 4 oder dem Anschlußelement. Der Kunststoffschlauch 10, der gegenüber den von ihm aufgenommenen isolierten elektrischen Leitungen 11 1 ( meistens Hilfs- und Steuerleitungen) einen Scheuerschutz gewährt, die danach zusätzlich gegen Scheuerwirkung infolge auftretender Vibration oder sonstige Einwirkungen geschützt sind, liegt auf einer aufgerauhten Auflagefläche des Anschlußelementes 3.1. Diese aufgerauhte Auflagefläche schließt sich der ringförmigen Auflagefläche des genannten Mantelteilbereiches nach einer Abstufung des Anschlußelementes 3.1 an und erstreckt sich bis zum freien Ende des Anschlußelementes 3.1. Damit ist der Kunststoffschlauch 5 dem metallenen Schutzschlauch 3 versetzt nachgeordnet. Die Aufrauhung der vorgenannten Auflagefläche des Anschlußelementes 3.1, beispielsweise mit radial nach außen gerichteten Rillen SS, ist von wesentlichem Interesse, da die ausgerichteten Rillen der aufgerauhten Auflagefläche dem aufliegenden Kunststoffschlauch 10, der in praxi im Flugzeugbau als Wellschlauch ausgeführt wird, nach abgeschlossener Crimpung kein Abziehen des Schlauchendes 10' gestatten.

Nachfolgend wird auf die besondere Gestaltung des am Grundkörper 3 axial angeformten (hohl-)zylindrischen Anschlußelementes 3.1 näher eingegangen.

Danach weist die äußere Mantelfläche des Aufnahmekörpers 3.1 mehrere Formveränderungen auf, wobei sich der Querschnitt des Aufnahmekörpers 3.1 nach jeder Formveränderung in Richtung des rechten freien Endes des Aufnahmekörpers 3.1 verjüngt. Jede Formveränderung des Aufnahmekörpers 3.1 ist als Abstufung ausgeführt, so daß die dem geringeren Querschnitt aufliegende Schutzschlauchverbindung 1 auf der äußeren Mantelfläche des Aufnahmekörpers 3.1 mit dem an der Oberkante der Abstufung einsetzenden gehobeneren Querschnitt abschließt. Der Aufnahmekörper 3.1 weist wenigstens zwei Abstufungen auf, die zwischen dem gehobeneren und dem geringeren Querschnitt jeweils einen Ansatz S1, S2 mit kreisrunder Stirnfläche bilden. Eine erste Abstufung setzt unmittelbar nach seinem fest angesetzten linken Ende nahe dem Grundkörper 3 ein, dem im Abstand S eine zweite Abstufung in Richtung des rechten freien Endes des Aufnahmekörpers 3.1 sich anschließt. Vorzugsweise ist das linke freie Ende 5' des metallenen Schutzschlauches 5 (des Metallgeflechtes) bis an den ersten Ansatz S1 der ersten Abstufung und das linke freie Ende 10' des Kunststoffschlauches 10 (Wellschlauch) bis an den Ansatz S2 der zweiten Abstufung geführt. Die Darstellung der Fig.2 zeigt außerdem, daß die äußere Mantelfläche des Aufnahmekörpers 3.1 zwischen den im Abstand S befindlichen Ansätzen S1, S2 eine ringförmige Auflagefläche RS bildet, die dem metallenen Schutzschlauch 5 (Metallgeflecht) eine ausreichende Kontaktfläche gewährt, sofern der metallenen Schutzschlauch 5 diese Auflagefläche RS - wie vorher ausgeführt - vollständig umhüllt.

Es wird mit erwähnt, daß die Erdungshülse 4 gegenüber dem Aufnahmekörper 3.1 eine größere Länge besitzt, so daß die rechten freien Enden der beiden Elemente zueinander eine im Abstand L sich ergebende Längendifferenz aufweisen.
Dadurch wird die Bildung der Hülsenschulter 4A (Crimpschulter), die im Ergebnis des Crimpens der Erdungshülse 4 auf die Ummantelung des metallenen Schutzschlauch 5 inclusive des Kunststoffschlauches 10 und auf das Anschlußelement 3.1 gebildet wird, erleichtert, wenn das nicht dargestellte Crimpwerkzeug und das innere freie Ende des Aufnahmekörpers 3.1 etwas kürzer ist, beispielsweise um ein Länge L.

In der Fig.3 wird eine Ansicht des Querschnittes III-III des Leitungsverbinders 2 nach der Fig. 1 dargestellt. Es wird gezeigt, daß die Erdungshülse 4 um die ringförmige Auflagefläche RS, die definitiv den äußeren Mantelbereich das Anschlußelement 3.1 (Aufnahmekörper) radial umspannt, den metallenen Schutzschlauch 5 nach erfolgter Crimpung dauerhaft stabil befestigt. Dabei wird das freie Ende 5' des metallenen Schutzschlauches 5 (des Metallgeflechtes) fest in seiner Position gehalten. Der Kunststoffschlauch 10 ist in dieser Figur 3 nicht sichtbar.

Abschließend wird ausgeführt, daß nach dem Beispiel die Laschen 7, 7' und damit die Erdungshülse 4 mit ihrer Hülsenschulter 4A aus elektrisch gut leitendem Material, beispielsweise Kupfer oder Aluminium, bestehen. Der geflechtartig ausgeführte metallene Schutzschlauch 5 besteht aus einem litzenartig geflochtenem Kupfer - Nickel - Geflecht, das ausreichend biegsam ist. Für diesen Zweck sind Kupfer - Nickel - Legierungen geeignet, wobei der Nickelanteil die Standzeit des Geflechtes an seinen leitfähigen Übergängen erhöht. Bei dem als Wellschlauch ausgeführten Kunststoffschlauch 10 handelt es sich um einen PTFE - Schutzschlauch, der eine gutes Isoliervermögen aufweist ausreichend biegsam ist. Die ihm beispielgemäß inneliegenden Hilfs- und Steuerleitungen gewähren einen ausreichenden Scheuerschutz.
Der Grundkörper 3 und das Anschlußelement 3.1 bestehen vorzugsweise aus dem gleichen Material, wie beispielsweise einer Aluminium- oder Kupferlegierung. Die Erdungshülse 4 besteht aus einem geeigneten plastisch verformbaren Metall, um die beabsichtigte Klemm- bzw. Crimpkraft, die ursprünglich mittels Crimpwerkzeug durch die Crimpwirkung aufgebracht wurde, dauerhaft stabil aufrechtzuerhalten.

### Bezugszeichen

- 1: Schutzschlauchverbindungen
- 2: Leitungsverbinder
- 3: Grundkörper, zylinderförmig, hohl
- 3': radial nach außen gerichtete Ringnut
- 3.1: Anschlußelement; Aufnahmekörper, zylinderförmig, hohl
- 4: Erdungshülse, zylinderförmig; Crimphülse
- 4A: Hülsenschulter; Crimpschulter
- 5: Schutzschlauch, metallen, geflechtartig; Metallgeflecht
- 5': freies Ende des metallenen geflechtartigen Schutzschlauches
- 6: Überwurfmutter
- 6A: Rändelung
- 6': radial nach innen gerichtete Ringnut
- 7: Erdungslasche
- 7A: Erdungslasche
- 7': Bohrung
- 8: Längsachse des Leitungsverbinders
- 9: Sprengring
- 10: Kunststoffschlauch; Wellschlauch
- 10': freies Ende des Kunststoffschlauches
- 11: Leitungen, isoliert, elektrisch
- S1: Ansatz
- S2: Ansatz
- S: Abstand zwischen den Ansätzen
- RS: Auflagefläche, ringförmig
- SS: Rillen
- L: Abstand; Längendifferenz

## Patentansprüche

1. Leitungsverbinder zum Anschluß von Schutzschlauchverbindungen (1) eines elektrischen Abschirmungs- oder eines Blitzschutzsystems im Flugzeug, mit folgenden Merkmalen:
a) er besteht:
- aus einem zylinderförmigen hohlen Grundkörper (3), dem am linken freien Ende koaxial und oberhalb der Mantelfläche des Grundkörpers (3) eine mittels Sprengring (9) drehbeweglich gelagerte Überwurfmutter (6) unverlierbar aufsitzt,
- aus einer zylinderförmigen Erdungshülse (4), die als Crimphülse ausgebildet ist, welche sich koaxial und oberhalb der Schutzschlauchverbindungen (1 ) befindet und die Befestigung der Schutzschlauchverbindungen (1 ) durch ihre Crimpung auf diesen realisiert, wobei dem Mantel der Erdungshülse (4) mindestens eine Erdungslasche (7) ausgeschnitten ist, die an einen Erdungsleiter angeschlossen ist,
b) die Schutzschlauchverbindungen (1) bilden ein Schutzschlauchsystem, das sich wenigstens aus einem flexiblen Kunststoffschlauch (10) und einem letzteren umhüllenden metallenen geflechtartigen Schutzschlauch (5) aufbaut und innerhalb des Kunststoffschlauches (10) mehrere isolierte elektrische Leitungen (11), die an Kontaktelementen des Leitungsverbinders (2) angeschlossen sind, aufnimmt,
c) die Überwurfmutter (6), der Grundkörper (3), die Erdungshülse (4) und der Sprengring (9) sind metallen ausgeführt,
**dadurch gekennzeichnet,**
- **daß** ein Anschlußelement (3.1), das koaxial und in Richtung der Längsachse (8) des Leitungsverbinders (2) den verlängerten Teil des Grundkörpers (3) bildet, aus einem zylinderförmigen hohlen und metallen Aufnahmekörper (3.1) zum Anschluß der Schutzschlauchverbindungen (1) besteht, dessen linkes Ende dem Grundkörper (3) fest angesetzt ist,
- **daß** das linke freie Ende der Erdungshülse (4) entweder an den Grundkörper (3) fest angeformt ist oder den Schutzschlauchverbindungen (1) lose aufliegt,
- **daß** das Anschlußelement (3.1), dem die Schutzschlauchverbindungen (1) unmittelbar aufliegen, unterhalb der Erdungshülse (4) angeordnet ist und die ihm aufliegenden Schutzschlauchverbindungen (1) stabil gegen den beim Crimpen aufgebrachten Anpreßdruck abstützt,
- **daß** die äußere Mantelfläche des Aufnahmekörpers (3.1 ) mehrere Formveränderungen aufweist, wonach sich der Querschnitt des Aufnahmekörpers (3.1 ) nach jeder Formveränderung in Richtung des rechten freien Endes des Aufnahmekörpers (3.1 ) verjüngt,
- **daß** jede Formveränderung des Aufnahmekörpers (3.1) als Abstufung ausgeführt ist, so daß die dem geringeren Querschnitt aufliegende Schutzschlauchverbindung (1) auf der äußeren Mantelfläche des Aufnahmekörpers (3.1 ) mit dem an der Oberkante der Abstufung einsetzenden gehobeneren Querschnitt abschließt,
- **daß** der Aufnahmekörper (3.1) wenigstens zwei Abstufungen aufweist, die zwischen dem gehobeneren und dem geringeren Querschnitt jeweils einen Ansatz (S1, S2) mit kreisrunder Stirnfläche bilden, wobei eine erste Abstufung unmittelbar nach seinem fest angesetzten linken Ende nahe dem Grundkörper (3) einsetzt, dem im Abstand (S) eine zweite Abstufung in Richtung des rechten freien Endes des Aufnahmekörpers (3.1) sich anschließt, und wobei vorzugsweise das linke freie Ende (5') des metallenen geflechtartigen Schutzschlauches (5) bis an den ersten Ansatz (S1) der ersten Abstufung und das linke freie Ende (10') des Kunststoffschlauches (10) bis an den Ansatz (S2) der zweiten Abstufung geführt wird.

2. **Leitungsverbinder** nach Anspruch 1, **dadurch gekennzeichnet, daß** die äußere Mantelfläche des Aufnahmekörpers (3.1) zwischen den im Abstand (S) befindlichen Ansätzen (S1, S2) eine ringförmige Auflagefläche (RS) ist, die dem metallenen geflechtartigen Schutzschlauch (5) eine ausreichende Kontaktfläche gewährt, sofern der metallene geflechtartige Schutzschlauch (5) diese Auflagefläche (RS) vollständig umhüllt.

3. **Leitungsverbinder** nach Anspruch **1, dadurch gekennzeichnet, daß** die dem zweiten Ansatz (S2) in Richtung des rechten freien Endes des Aufnahmekörpers (3.1) nachgeordnete äußere Mantelfläche mit einer Aufrauhung versehen ist, welche durch ihr fest aufsitzende Rillen (SS) realisiert ist, die so ausgerichtet sind, daß sie ein Abziehen des linken freien Endes (10') des Kunststoffschlauches (10) vom Aufnahmekörper (3.1) verhindern.

4. **Leitungsverbinder** nach Anspruch 1 , **dadurch gekennzeichnet, daß** die Erdungshülse (4) gegenüber dem Aufnahmekörper (3.1) eine größere Länge besitzt, so daß die rechten freien Enden der beiden Elemente zueinander eine im Abstand (L) sich ergebende Längendifferenz aufweisen.

## Claims

1. Line connector for connecting protective tube connections (1) of an electrical screening system or lightning protection system in aircraft, having the following features:
a) it comprises:
- a cylindrical hollow basic body (3), on the left free end of which a union nut (6), which is supported rotatably by means of snap ring (9), is captively seated coaxially and above the lateral surface of the basic body (3),
- a cylindrical earthing barrel (4) in the form of a crimp barrel, which is situated coaxially and above the protective tube connections (1) and realizes the fastening of the protective tube connections (1) by means of its crimping thereon, wherein at least one earthing lug (7) is cut out of the lateral surface of the earthing barrel (4) and connected to an earthing conductor,
b) the protective tube connections (1) form a protective tube system, which at least comprises a flexible plastic tube (10) covered by a metal braid-like protective tube (5) and receives inside the plastic tube (10) a plurality of insulated electric lines (11), which are connected to contact elements of the line connector (2),
c) the union nut (6), the basic body (3), the earthing barrel (4) and the snap ring (9) are of a metal construction,
**characterized in that**
- a connection element (3.1), which coaxially and in the direction of the longitudinal axis (8) of the line connector (2) forms the lengthened part of the basic body (3), comprises a cylindrical hollow and metal receiving body (3.1) for connection of the protective tube connections (1), the left end of which receiving body is firmly attached to the basic body (3),
- the left free end of the earthing barrel (4) is either formed in a fixed manner on the basic body (3) or loosely supported on the protective tube connections (1),
- the connection element (3.1), on which the protective tube connections (1) are directly supported, is disposed underneath the earthing barrel (4) and supports the protective tube connections (1), which are supported thereon, in a stable manner against the application force summoned up during crimping,
- the outer lateral surface of the receiving body (3.1) comprises a plurality of dimensional variations, according to which the cross-section of the receiving body (3.1) after each dimensional variation tapers in the direction of the right free end of the receiving body (3.1),
- each dimensional variation of the receiving body (3.1) takes the form of a graduation, so that the protective tube connection (1) supported on the smaller cross-section terminates at the outer lateral surface of the receiving body (3.1) having the higher cross-section that starts at the upper edge of the graduation,
- the receiving body (3.1) comprises at least two graduations, which between the higher and the smaller cross-section form in each case a shoulder (S1, S2) with an annular end face, wherein a first graduation starts immediately after its firmly attached left end close to the basic body (3) and is adjoined at a distance (S) by a second graduation in the direction of the right free end of the receiving body (3.1), and wherein preferably the left free end (5') of the metal braid-like protective tube (5) extends up to the first shoulder (S1) of the first graduation and the left free end (10') of the plastic tube (10) extends up to the shoulder (S2) of the second graduation.

2. Line connector according to claim 1, **characterized in that** the outer lateral surface of the receiving body (3.1) between the shoulders (S1, S2) situated at the distance (S) is an annular supporting surface (RS), which affords the metal braid-like protective tube (5) an adequate contact surface, provided that the metal braid-like protective tube (5) completely covers said supporting surface (RS).

3. Line connector according to claim 1, **characterized in that** the outer lateral surface disposed downstream of the second shoulder (S2) in the direction of the right free end of the receiving body (3.1), is provided with roughening, which is realized by grooves, which are disposed firmly thereon and are aligned in such a way as to prevent the left free end (10') of the plastic tube (10) from being pulled off the receiving body (3.1).

4. Line connector according to claim 1, **characterized in that** the earthing barrel (4) has a greater length than the receiving body (3.1), so that the right free ends of the two elements have in relation to one another a resulting length difference corresponding to the distance (L).

## Revendications

1. **Connexion de ligne** pour le raccordement de tuyaux de protection (1) d'un système de blindage électrique ou d'un système parafoudre à l'intérieur d'un avion, avec les caractéristiques suivantes :
a) il se compose :
- d'un corps de base (3) creux et cylindrique sur l'extrémité libre gauche duquel repose, de manière coaxiale et au-delà de la surface de manteau du corps de base (3), un écrou à chapeau (6) disposé de manière à pouvoir pivoter à l'aide d'un circlip (9),
- d'un boîtier de mise à la terre (4) cylindrique conçu sous la forme d'un boîtier à crampon, ledit boîtier étant coaxial et situé au-delà des raccordements des tuyaux de protection (1) et fixant les raccordements des tuyaux de protection (1) en se cramponnant sur ces raccordements, au moins une patte de mise à la terre raccordée à une ligne de mise à terre ayant été découpée du manteau du boîtier de mise à la terre (4),
b) les raccordements des tuyaux de protection (1) forment un système de tuyaux de protection composé au moins d'un tuyau synthétique (10) flexible et d'un tuyau de protection (5) métallique semblable à un entrelacement et enserrant ledit tuyau synthétique, ledit système de tuyaux de protection recevant, à l'intérieur du tuyau synthétique (10) plusieurs canalisations électriques (11) isolées raccordées à des éléments de contact de la connexion de ligne (2),
c) l'écrou à chapeau (6), le corps de base (3), le boîtier de mise à la terre (4) et le circlip (9) sont en métal,
**caractérisée en ce que**
- un élément de raccordement (3.1) formant, dans le sens coaxial et en direction de l'axe longitudinal (8) de la connexion de ligne (2), la partie prolongée du corps de base (3) est constitué d'un corps de réception (3.1) cylindrique creux et métallique destiné à raccorder les raccordements de tuyaux de protection (1) et dont l'extrémité gauche a été fermement apposée contre le corps de base (3),
- l'extrémité libre gauche du boîtier de mise à la terre (4) a été formée de manière fixe contre le corps de base (3) ou repose librement sur les raccordements de tuyaux de protection (1),
- l'élément de raccordement (3.1) sur lequel les raccordements de tuyaux de protection (1) reposent directement est situé en dessous du boîtier de mise à la terre et protège de façon stable les raccordements de tuyaux de protection reposant sur lui contre la pression d'application exercée lors du cramponnage,
- la surface de manteau extérieure du corps de réception (3.1) présente plusieurs modifications de forme selon lesquelles la section transversale du corps de réception (3.1) s'effile après chaque changement de forme, en direction de l'extrémité libre droite du corps de réception (3.1),
- chaque changement de forme du corps de réception (3.1) a été conçu comme une gradation, de telle sorte que le raccordement de tuyaux de protection (1) reposant sur la section transversale plus réduite se termine, sur la surface de manteau externe du corps de réception (3.1), par la section transversale insérable contre le bord supérieur de la gradation,
- le corps de réception (3.1) présente au moins deux gradations formant systématiquement, entre la section transversale relevée et la section transversale plus réduite, un embout (S1, S2) à surface d'attaque arrondie, une première gradation venant se placer près du corps de base (3), directement après son extrémité gauche fermement disposée, une deuxième gradation venant, à distance (S), se raccorder au dit corps de base, en direction de l'extrémité libre droite du corps de réception (3.1), l'extrémité libre gauche (5') du tuyau de protection métallique en forme de tresse (5) étant, quant à elle, étant, quant à elle, guidée de préférence jusqu'au premier embout (S1) de la première gradation tandis que l'extrémité libre gauche (10') du tuyau synthétique (10) est guidée jusqu'à l'embout (S2) de la deuxième gradation.

2. **Connexion de ligne** selon la revendication 1, **caractérisée en ce que** la surface de manteau externe du corps de réception (3.1) située entre les embouts (S1, S2) disposés à distance (S) consiste en une surface d'appui (RS) circulaire octroyant au tuyau de protection métallique en forme de tresse (5) une surface de contact suffisante, pour autant que le tuyau de protection métallique en forme de tresse (5) enveloppe complètement cette surface d'appui (RS).

3. Connexion de ligne selon la revendication 1, **caractérisée en ce que** la surface de manteau externe disposée en aval du deuxième embout (S2), en direction de l'extrémité libre droite du corps de réception (3.1), est dotée d'une égratignure réalisée via des stries reposant fermement sur ladite surface de manteau et disposées de manière à empêcher toute traction vers le bas de l'extrémité libre gauche (10') du tuyau synthétique (10) par le corps de réception (3.1).

4. **Connexion de ligne** selon la revendication 1, **caractérisée en ce que** le boîtier de mise à la terre (4) présente, par rapport au corps de réception (3.1), une longueur plus grande de telle sorte que les extrémités libres droites des deux éléments présentent, les unes par rapport aux autres et à distance, une différence de longueur.
